# EUROPEAN PATENT SPECIFICATION

(11) **EP 2 915 853 B1**
(45) Date of publication and mention of the grant of the patent: **28.04.2021**
(21) Application number: 13851780.0
(22) Date of filing: 01.11.2013
(51) Int. Cl.: C08L 83/07, C08K 5/34, C08K 5/43, C08L 83/05, C09K 3/16, C08L 83/04

(54) **THERMOSETTING SILICONE RUBBER COMPOSITION**
WÄRMEHÄRTENDE SILIKONKAUTSCHUKZUSAMMENSETZUNG
COMPOSITION DE CAOUTCHOUC DE SILICONE THERMODURCISSABLE

(30) Priority: 05.11.2012 JP 2012243429
(43) Date of publication of application: 09.09.2015
(73) Proprietor: Momentive Performance Materials Japan LLC, Tokyo 107-6109 (JP)
(72) Inventor: TAKAHASHI Hideo, Tokyo 107-6109 (JP); IIJIMA Hiroyoshi, Tokyo 107-6109 (JP); TAGAI Hidefumi, Tokyo 107-6109 (JP)
(74) Representative: Gille Hrabal Partnerschaftsgesellschaft mbB Patentanwälte
(86) International application number: PCT/JP2013/079694
(87) International publication number: WO 2014/069622

(56) References cited:
- JP-A- 2003 082 232
- JP-A- 2004 331 786
- JP-A- 2005 344 102
- JP-A- 2009 056 751
- JP-A- 2009 173 922
- US-A1- 2009 062 499
- US-A1- 2011 039 991
- US-A1- 2011 069 392
- US-A1- 2012 168 781
- "Silicones", 15 April 2003 (2003-04-15), ENCYCLOPEDIA OF POLYMER SCIENCE AND TECHNOLOGY, WILEY, US, PAGE(S) 765 - 841, XP007918236, * pages 779-782 * * pages 801-804 *
- Denisse Ortiz-Acosta: "Sylgard Cure Inhibition Characterization", , 7 October 2012 (2012-10-07), XP055378051, DOI: 10.2172/1053123 Retrieved from the Internet: URL:http://permalink.lanl.gov/object/tr?wh at=info:lanl-repo/lareport/LA-UR-12-25325 [retrieved on 2017-06-01]
- DATABASE WPI Week 200732 Thomson Scientific, London, GB; AN 2007-336446 -& JP 2007 051233 A (DAICEL POLYMER KK) 1 March 2007 (2007-03-01)
- DATABASE WPI Week 201134 Thomson Scientific, London, GB; AN 2011-F28999 -& JP 2011 099055 A (ASAHI KASEI KK) 19 May 2011 (2011-05-19)

## Description

### Technical Field

The present invention relates to a heat curable silicone rubber composition capable of obtaining a cured product having a high transparency and antistatic property and suitable for optical applications.

### Background Art

Since a silicone rubber can give a cured product having a high transparency, the silicone rubber is used as a raw material for various uses such as optical applications. The use applications of sealing or protection of LED, lens, and the like are known as the optical applications.

There is a case where a silicone rubber is required to have antistatic property, depending on the applications. In such a case, there is known a heat curable silicone rubber in which an ionic liquid is blended as an antistatic agent (WO-A1 2009/084730) .

In addition, in the case of the use for the optical applications and in the case where antistatic property is required, both of transparency and antistatic property are required to be provided at a high level, for instance as disclosed in the curable silicone composition of US 2012/0168781 A1.

In WO-A1 2009/084730, there is no description of transparency at all.

### Summary of the Invention

An object of the present invention is to provide a heat curable silicone rubber composition capable of obtaining a cured product provided with both transparency and antistatic property.

The present invention provides the following invention as a means for solving the problem.

A heat curable silicone rubber composition including:
(A) 100 parts by mass of an organopolysiloxane having an average polymerization degree of 50 to 10000 and containing at least two alkenyl groups bonded to a silicon atom in one molecule;
(B) 10 to 400 parts by mass of a silicone resin which includes units selected from R₃SiO1/2 unit (unit M), SiO4/2 unit (unit Q), R₂SiO2/2 unit (unit D), and RSiO3/2 unit (unit T) (where R is a monovalent hydrocarbon group having 1 to 6 carbon atoms and at least two in one molecule are alkenyl groups) and in which a sum of the unit M, unit Q and unit T in the whole structural units is 80% by mole or more;
(C) an organohydrogenpolysiloxane containing at least two hydrogen atoms bonded to a silicon atom in one molecule, in an amount such that the number of the hydrogen atoms bonded to a silicon atom per one alkenyl group bonded to a silicon atom in the component (A) and the component (B) is 1.0 to 10.0;
(D) a hydrosilylation reaction catalyst, and
(E) 30 to 3000 ppm of an ionic liquid serving as an antistatic agent,
wherein the ionic liquid of the component (E) is one in which a difference of a refractive index from a refractive index of a cured product formed of a base silicone rubber mixture of the components (A), (B), (C) and (D) is within the range of ± 0.04.

Furthermore, the present invention provides a cured product of the above-mentioned heat curable silicone rubber composition.

The cured product obtained from the heat curable silicone rubber composition of the present invention has a high transparency and is excellent in antistatic property.

### Detailed Description of the Invention

The heat curable silicone rubber composition of the present invention contains a silicone rubber base polymer including the components (A) to (D) and the component (E).

### <Component (A)>

The component (A) is an organopolysiloxane having an average polymerization degree of 50 to 10000 and including at least two alkenyl groups bonded to a silicon atom in one molecule.

A group bonded to silicon atom other than alkenyl group can include a monovalent hydrocarbon group.

Examples of the monovalent hydrocarbon group can include an alkyl group such as methyl, ethyl, propyl or butyl; an aryl group such as phenyl or tryl; a cycloalkyl group such as cyclohexyl; an aralkyl group such as benzyl or β-phenylethyl; or chrolomethyl, cyanoethyl or the like in which a part or the whole of hydrogen atoms bonded to carbon atoms of those groups is substituted by a halogen atom (excluding fluorine atom), cyano group and the like, and methyl is preferable.

The alkenyl group bonded to silicon atom includes vinyl, allyl, and the like, and vinyl is preferable.

The organopolysiloxane of the component (A) is preferably a linear one, but may be one containing a branched structure as a part thereof.

An average polymerization degree of the organopolysiloxane of the component (A) is 50 to 10000, preferably 200 to 8000, and more preferably 500 to 1500.

### <Component (B) >

The component (B) is a silicone resin including units selected from the unit M, the unit Q, the unit D, and the unit T, where R is a monovalent hydrocarbon group having 1 to 6 carbon atoms and at least two in one molecule are alkenyl groups, and a sum of the unit M, unit Q and unit T in the whole structural units is 80% by mole or more.

The unit M, the unit Q, the unit D and the unit T are as follows.
Unit M: R₃SiO_{1/2} unit
Unit Q: SiO_{4/2} unit
Unit D: R₂SiO_{2/2} unit
Unit T: RSiO_{3/2} unit

R in each unit is a monovalent hydrocarbon group having 1 to 6 carbon atoms and preferably methyl group or phenyl group.

The sum of the unit M, unit Q and unit T in the whole structural units is 80% by mole or more, it is preferable that the sum of the unit M and unit Q in the whole structural units is 80% by mole or more.

Examples of the silicone resin of the component (B) can include a copolymer of vinyldimethylsiloxy group and the unit Q, a copolymer of vinyldimethylsiloxy group·trimethylsiloxy group and the unit Q, a copolymer of vinyldimethylsiloxy group-dimethylsiloxane unit and the unit Q, a copolymer of vinyldimethylsiloxy group·phenylsilsesquioxane unit and the unit Q, a copolymer of vinyldimethylsiloxy group·dimethylsiloxane unit ·phenylsilsesquioxane unit and the unit Q, a copolymer of trimethylsiloxy group ·vinylmethylsiloxane unit and the unit Q, and the like.

The content of the component (B) in the composition is 10 to 400 parts by mass relative to 100 parts by mass of the component (A), preferably 10 to 150 parts by mass, and more preferably 20 to 100 parts by mass.

### <Component (C)>

The component (C) is an organohydrogenpolysiloxane containing at least two hydrogen atoms bonded to a silicon atom in one molecule. The component (C) may be any one of linear, branched-chain or circular.

Examples of the component (C) can include a diorganopolysiloxane blocked with dimethylhydrogensilyl group, a copolymer of dimethylsiloxane unit and methylhydrogensiloxane unit and end trimethylsiloxane unit, a low-viscosity fluid of dimethylhydrogensiloxane unit and SiO₂ unit, 1,3,5,7-tetrahydrogen-1,3,5,7-tetramethylcyclotetrasiloxane, 1-propyl-3,5,7-trihydrogen-1,3,5,7-tetramethylcyclotetrasiloxane, 1,5-dihydrogen-3,7-dihexyl-1,3,5,7-tetramethylcyclotetrasiloxane, and the like.

The content of the component (C) in the composition is an amount such that the number of the hydrogen atoms bonded to a silicon atom per one alkenyl group bonded to a silicon atom in the component (A) and the component (B) is 1.0 to 10.0, preferably 1.0 to 5.0.

### <Component (D)>

A platinum element, a platinum compound, and a platinum complex can be used as the hydrosilylation reaction catalyst as the component (D), and specific examples thereof can include a platinic acid chloride such as platinic primary acid chloride or platinic secondary acid chloride; a platinum--based complex such as a complex of a platinic acid chloride with an alcohol compound, aldehyde compound, ether compound or various olefins; a platinum-vinylsiloxane complex, and the like.

The content of the component (D) in the composition is preferably 0.1 to 200 ppm as a platinum atom relative to the component (A), more preferably 1 to 50 ppm.

### <Component (E) >

The component (E) is an ionic liquid serving as an antistatic agent, and is a component in which a difference of a refractive index from a refractive index formed of a molded article of a base silicone rubber mixture of the components (A) to (D) is within the range of ± 0.04. Furthermore, the component having a difference of the refractive indexes being within the range of ± 0.02 is more preferable.

The ionic liquid of the component (E) is preferably a liquid at normal temperature (23°C), and may be a liquid at temperature higher than the above-mentioned temperature. In addition, the ionic liquid is preferable to be poorly water-soluble or water-insoluble.

Furthermore, from the viewpoint of solubility in water, the ionic liquid of the component (E) is preferably an ionic liquid having poor water-solubility or water-insolubility with respect to the solubility in water. Note that, at normal temperature, an ionic liquid easily dissolved in water when water and the liquid are mixed in equal amounts is defined as being easily water-soluble, whereas the liquid phase-separated when being allowed to stand after mixing is defined as being water-insoluble, and the liquid becoming white turbid and not dissolved is defined as being poorly water-soluble.

The ionic liquid described above includes a cation and an anion.

Examples of the anion are an alkyl sulfate-based anion, a tosylate anion, a sulfonate-based anion, bis(trifluoromethanesulfonyl)imide anion, bis(fluorosulfonyl)imide anion, hexafluorophosphate anion, tetrafluoroborate anion, a halide anion, and the like.

Examples of the alkyl sulfate anion are methyl sulfate anion, ethyl sulfate anion, octyl sulfate anion, 2-(2-methoxyethoxy)ethyl sulfate, and the like. Examples of the sulfonate-based anion are methanesulfonate anion, trifluoromethanesulfonate anion, and the like. Examples of the halide anion are chloride anion, bromide anion, iodide anion, and the like.

Among them, from the viewpoint of being capable of imparting the antistatic property without impairing the excellent properties of the silicone rubber, the ionic liquid having bis(trifluoromethanesulfonyl)imide anion or bis(fluorosulfonyl)imide anion is preferable.

In addition, examples of the cation component of the ionic liquid of the component (E) are an imidazolium-based cation, a pyrrolidinium-based cation, a pyridinium-based cation, an ammonium -based cation, a phosphonium-based cation, a sulfonium-based cation, and the like. Particularly in the present invention, preferable are the imidazolium-based cation, the pyrrolidinium-based cation, the pyridinium-based cation, the ammonium-based cation.

Furthermore, it is possible to use the ionic liquid having at least one alkenyl group as the cation component. The component (B) including such a cation component is particularly preferable because of being able to stay for a long time within the silicone rubber composition.

Here, examples of the alkenyl group are a aliphatic unsaturated hydrocarbon group such as vinyl, allyl, methylvinyl, propenyl, butenyl, pentenyl or hexenyl; a cyclic unsaturated hydrocarbon group such as cyclopropenyl, cyclobutenyl, cyclopentenyl or cyclohexenyl; methacryl group, and the like. Among them, vinyl group or allyl group is preferable.

Examples of the pyrrolidinium-based cation are 1-butylmethylpyrrolidinium cation,
1-methyl-propylpyrrolidinium cation and the like. Examples of the pyridinium-based cation are 3-methyl-1-propylpyridinium cation, N-butyl-3-methylpyridinium cation,
1-methyl-1-propylpyridinium cation and the like. Examples of the ammonium-based cation are diallyldimethylammonium cation, methyltrioctylammonium cation and the like. Examples of the imidazolium-based cation are 1-butyl-3-methylimidazolium cation, 1,2-dimethyl-3-propylimidazolium cation,
1-ethyl-3-methylimidazolium cation, 1-vinylimidazolium cation, 1-allylimidazolium cation,
1-allyl-3-methylimidazolium cation and the like.

Preferable examples of the ionic liquid of the component (E) are one selected from the followings.

1-butyl-1-methylpyrrolidinium-bis-(trifluoromethanesulfonyl)imide,
1-ethyl-3-methylimidazolium·bis(fluorosulfonyl)imide,
1-butyl-3-methylpyridinium·bis-(trifluoromethanesulfonyl)imide,
diallyldimethylammonium·bis(trifluoromethanesulfonyl)-imide,
1-butyl-3-methylpyridinium·bis (fluorosulfonyl)imide,
1-ethyl-3-methylpyridinium·bis (fluorosulfonyl)imide,
1-ethyl-3-methylimidazolium·bis-(trifluoromethanesulfonyl)imide,
1-methyl-1-propylpyrrolidinium·bis(fluorosulfonyl)-imide,
1-ethyl-3-methylimidazolium·bis(fluorosulfonyl)imide,
methyltrioctylammonium·bis(trifluoromethanesulfonyl)-imide,
tributylmethylammonium·bis(trifluoromethanesulfonyl)-imide.

In order to impart, at a high level, transparency and antistatic property to the cured product obtained from the composition, the content of the component (E) in the composition relative to the mass of the silicone rubber base polymer containing the components (A) to (D) is 30 to 3000 ppm, preferably 40 to 2000 ppm, more preferably 50 to 1500 ppm.

As the other components, there can be used a reaction inhibitor for properly regulating a pot life by the control of the hydrosililation, a metal oxide as a heat resistance improver, a flame retardant aid, an antistatic agent other than the component (E), a processing aid, and the like.

Furthermore, an alkoxysilane-based compound containing an alkoxysilyl group, a silane coupling agent, a titanium-based or zirconium-based condensation catalyst, and the like can also be blended as a cross-linking aid.

The composition of the present invention can be obtained by uniformly mixing the above-mentioned components. In this mixing, a mixing machine usually used for a general silicone rubber blending can be used, and for example, a universal kneader, a planetary mixer, Banbury mixer, a gate mixer, Shinagawa mixer, a pressurizing mixer, a three-roll, and a twin-roll can be used.

According to the composition of the present invention, the composition in which the total light transmittance at 600 nm of a sheet formed of the cured product and having a thickness of 12 mm is larger than 85% is preferable, and the composition in which the total light transmittance at 600 nm of a sheet formed of the cured product and having a thickness of 2 mm is larger than 93% is more preferable.

The composition of the present invention can be used as a manufacturing raw material for various optical applications, and can include LED lens and the like.

### Example

The following Examples describe the working of the present invention are explained. The Examples describe exemplification of the present invention, and the present invention is not limited thereby.

### Example and Comparative Example

The organopolysiloxane of the component (A) and the silicone resin of the component (B) shown in Table 1 were mixed by using a universal kneader (mixing and stirring machine 5DMV-α manufactured by DALTON).

At that time, in order to disperse the component (B) into the component (A), the component (B) was mixed in the form of 60% (by mass) xylene solution so that the amount of the component (B) was the blending amount shown in Table 1. After mixing, xylene contained in the mixture was distilled off under 140°C/667 Pa {5 mmHg}.

Then, after cooling to normal temperature (20 to 25°C), the hydrosilylation catalyst of the component (D), 1-ethynyl-1-cyclohexanol of the reaction inhibitor, and the organohydrogensiloxane of the component (C) were mixed.

Finally, the additives for imparting the antistatic property such as the ionic liquid of the component (E) or an ionic substance as a comparative material were mixed and thus the silicone rubber composition shown in Table 1 was prepared. The measurements shown in Table 1 were carried out with respect to the compositions obtained.

Details of the respective components and units shown in Table 1 are as follows.

### (Unit M)

Unit M: (CH₃)₃SiO_{1/2}-
Unit MH: (CH₃) ₂HSiO_{1/2}-
Unit Mv: (CH₃) ₂(CH₂=CH) SiO_{1/2}-

### (Unit D)

Unit D: -(CH₃)₂SiO-
Unit DH: - (CH₃) HSiO-
Unit Dv: - (CH₃) (CH₂=CH)SiO-
Unit Dff : - (C₆H₅) ₂SiO-

### (Unit T)

Unit Tf: C₆H₅SiO_{3/2} (trifunctionality)

### (Unit Q)

Unit Q: SiO_{4/2} (tetrafunctionality)

### <Component (A)>

(A-1) : Dimethylpolysiloxane blocked at the both ends with dimethylvinylsiloxy groups and having an average polymerization degree of 940
(A-2): Linear polymethylvinylphenylsiloxane blocked at the both ends with dimethylvinylsiloxy groups, having 16 % of the unit Dff and residue of the unit D, and having a polymerization degree of 200 at 23°C.

### <Component (B)>

Polymethylvinylsiloxane resin including the unit M, the unit Mv and the unit Q, and represented by molar unit ratio of M₅MvQ₈ .

### <Component (C)>

Polymethylhydrogensiloxane represented by M^{H}₈Q₄ having an average molecular weight of 800

### <Component (D)>

Platinum-vinylsiloxane complex having a platinum content of 2% by mass

### <Others>

Reaction inhibitor: 1-Ethyl-1-cyclohexanol

### <Component (E)>

Ionic liquid 1: 1-Butyl-1-methylpyrrolidinium·bis-(trifluoromethanesulfonyl)imide, refractive index 1.423
Ionic liquid 2: 1-Ethyl-3-methylimidazolium·bis-(fluorosulfonyl)imide, refractive index 1.423
Ionic liquid 3: 1-Butyl-3-methylpyridinium·bis-(trifluoromethanesulfonyl)imide, refractive index 1.446
Ionic liquid 4: Diallyldimethylammonium·bis-(trifluoromethanesulfonyl)imide, refractive index 1.425
Ionic liquid 5: 1-Butyl-3-methylpyridinium·bis-(fluorosulfonyl)imide, refractive index 1.459
Ionic liquid 6: 1-Ethyl-3-methylpyridinium·bis-(fluorosulfonyl)imide, refractive index 1.472
Ionic liquid 7: 1-Ethyl-3-methylimidazolium·bis-(trifluoromethanesulfonyl)imide, refractive index 1.423
Ionic liquid 8: 1-Methyl-1-propylpyrrolidinium·bis-(fluorosulfonyl)imide, refractive index 1.443
Ionic liquid 9: 1-Ethyl-3-methylimidazolium·bis-(fluorosulfonyl)imide, refractive index 1.448
Ionic liquid 10: Methyltrioctylammonium·bis-(fluorosulfonyl)imide, refractive index 1.438
Li.TFSI 50% aqueous solution: Litium·bis-(trifluoromethanesulfonyl)imide, refractive index 1.355

### (Production method of sheet)

After defoaming each component shown in Table 1 under reduced pressure and then casting the obtained compositions into a die, press-molding was performed at 150°C for 10 minutes to thereby give molded articles of the silicone rubber composition having a thickness of 2 mm for measuring a volume resistivity, and having thicknesses of 2 mm and 12 mm for measuring a total light transmittance and a HAZE.

### (Refractive index: refractive indexes of a cured product of the base polymer mixture including the components (A) to (D) , and an ionic liquid)

A refractive index was measured by using Abbe's refractometer ATAGOT1.

A test piece was obtained by placing a base polymer mixture including the components (A) to (D) on a smooth metal plate heated to 100°C or more, by thinly stretching in the form of thin film having a thickness of 0.1 mm or less with a spatula and the like, and by heating to be cured.

### [Charged Voltage Half-Life]

After a test piece was charged by 6 KV corona discharge, the time (second) when a charged voltage is reduced by half was measured through the use of a Static Honestmeter H-0110 manufactured by Shishido Electrostatic, Ltd.

### (Total light transmittance)

The total light transmittance at 600 nm was measured by spectrophotometer CM-3500d manufactured by KONICA MINOLTA (thicknesses of test piece to be measured 2 mm and 12 mm).

### (HAZE)

The measurement was carried out in accordance with JIS K 7105 by using HAZE METER NDH5000 manufactured by NIPPON DENSHOKU INDUDTRIES Co., LTD.

### (thicknesses of test piece to be measured 2 mm and 12 mm)

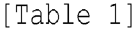

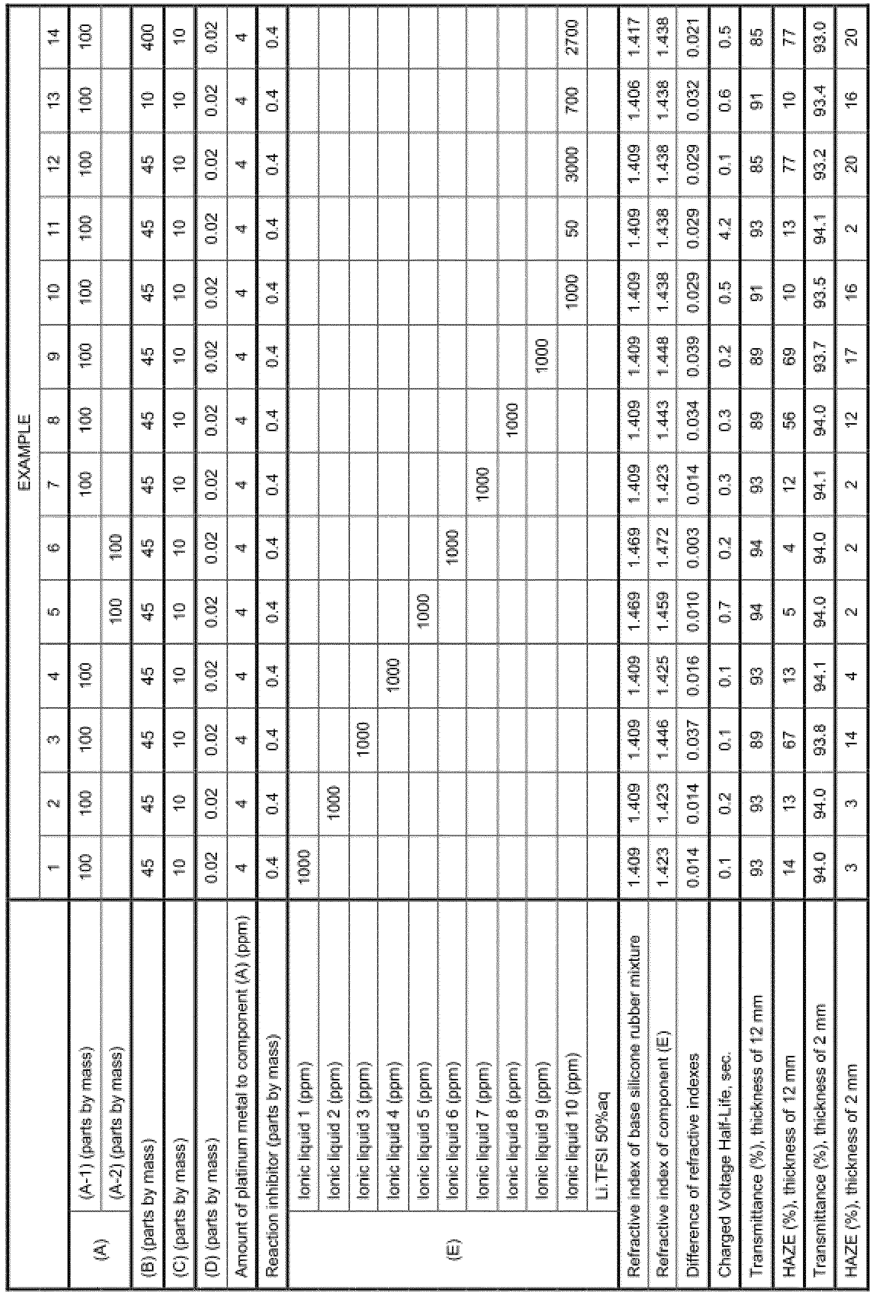

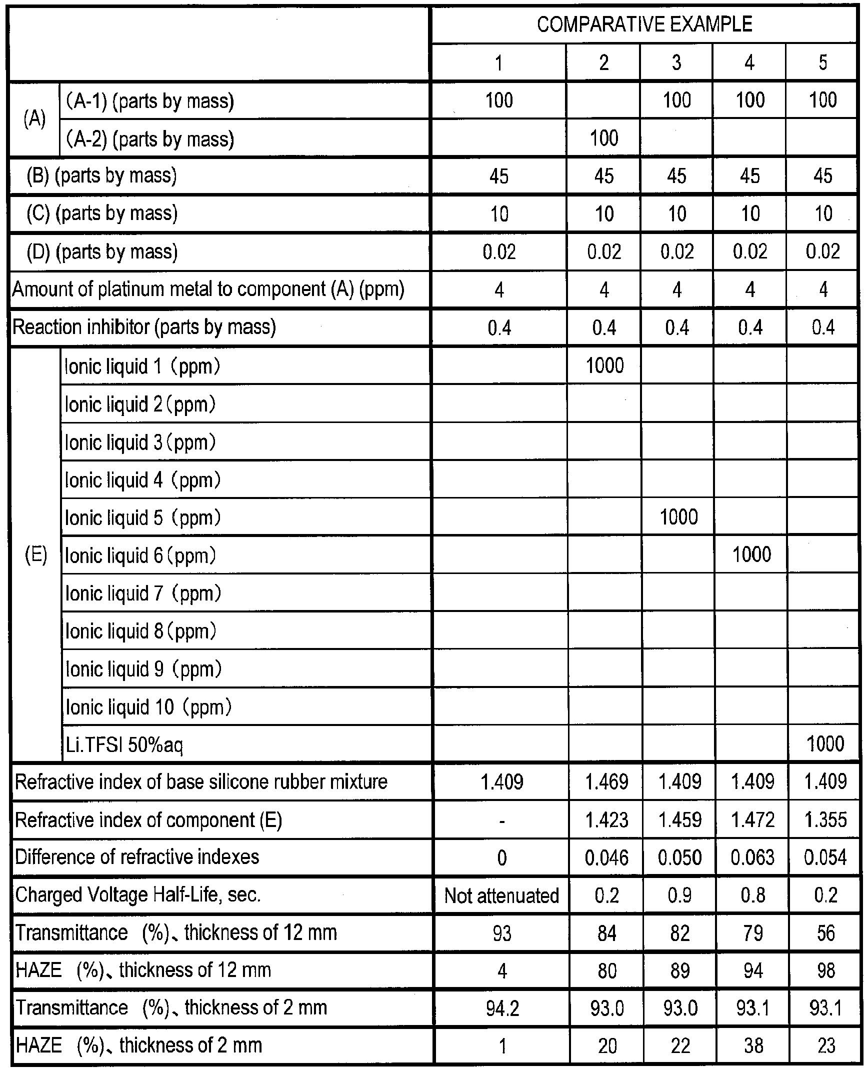

The composition of the present invention can be used as a manufacturing raw material for various optical uses including LED lens.

## Claims

1. A heat curable silicone rubber composition comprising:
(A) 100 parts by mass of an organopolysiloxane having an average polymerization degree of 50 to 10000 and containing at least two alkenyl groups bonded to a silicon atom in one molecule;
(B) 10 to 400 parts by mass of a silicone resin which includes units selected from R₃SiO1/2 unit (unit M), SiO4/2 unit (unit Q), R₂SiO2/2 unit (unit D), and RSiO3/2 unit (unit T) (where R is a monovalent hydrocarbon group having 1 to 6 carbon atoms and at least two in one molecule are alkenyl groups) and in which a sum of the unit M, unit Q and unit T in the whole structural units is 80% by mole or more;
(C) an organohydrogenpolysiloxane containing at least two hydrogen atoms bonded to a silicon atom in one molecule, in an amount such that the number of the hydrogen atoms bonded to a silicon atom per one alkenyl group bonded to a silicon atom in the component (A) and the component (B) is 1.0 to 10.0;
(D) a hydrosilylation reaction catalyst, and
(E) 30 to 3000 ppm of an ionic liquid serving as an antistatic agent,
wherein the ionic liquid of the component (E) is one in which a difference of a refractive index from a refractive index of a cured product formed of a base silicone rubber mixture of the components (A), (B), (C) and (D) is within a range of ± 0. 04, and wherein the refractive index is measured using Abbe's refractometer in accordance with the description.

2. The heat curable silicone rubber composition according to claim 1, wherein the ionic liquid of the component (E) is a liquid at a normal temperature (23°C).

3. The heat curable silicone rubber composition according to claim 1 or 2, wherein the ionic liquid of the component (E) has bis(trifluoromethanesulfonyl)imide or bis(fluorosulfonyl)imide, as an anion component.

4. The heat curable silicone rubber composition according to any one of claims 1 to 3, wherein the ionic liquid of the component (E) has an imidazolium-based cation, a pyrrolidinium-based cation, a pyridinium-based cation, or an ammonium-based cation, as a cation component.

5. The heat curable silicone rubber composition according to claim 1 or 2, wherein the component (E) is one selected from
1-butyl-1-methylpyrrolidinium-bis-(trifluoromethanesulfonyl)imide,
1-ethyl-3-methylimidazolium·bis(fluorosulfonyl)imide, 1-butyl-3-methylpyridinium-bis-(trifluoromethanesulfonyl)imide,
diallyldimethylammonium-bis(trifluoromethanesulfonyl)i mide,
1-butyl-3-methylpyridinium·bis (fluorosulfonyl)imide,
1-ethyl-3-methylpyridinium·bis (fluorosulfonyl)imide,
1-ethyl-3-methylimidazolium·bis-(trifluoromethanesulfonyl)imide,
1-methyl-1-propylpyrrolidinium·bis(fluorosulfonyl)-imide,
1-ethyl-3-methylimidazolium·bis(fluorosulfonyl)imide, methyltrioctylammonium·bis(trifluoromethanesulfonyl)-imide, and
tributylmethylammonium·bis(trifluoromethanesulfonyl)-imide.

6. The heat curable silicone rubber composition according to any one of claims 1 to 5, wherein a total light transmittance at 600 nm of a sheet formed of a cured product of the composition and having a thickness of 12 mm is larger than 85%.

7. The heat curable silicone rubber composition according to any one of claims 1 to 5, wherein a total light transmittance at 600 nm of a sheet formed of a cured product of the composition and having a thickness of 2 mm is larger than 93%.

8. A cured product of the heat curable silicone rubber composition according to any one of claims 1 to 7.

9. The cured product according to claim 8, wherein a total light transmittance at 600 nm of a sheet having a thickness of 12 mm is larger than 85%.

10. The cured product according to claim 8, wherein a total light transmittance at 600 nm of a sheet having a thickness of 2 mm is larger than 93%.

## Patentansprüche

1. Eine wärmehärtbare Silikonkautschukzusammensetzung, die umfasst:
(A) 100 Gewichtsteile eines Organopolysiloxans, das einen mittleren Polymerisationsgrad von 50 bis 10000 aufweist und mindestens zwei Alkenylgruppen, die an ein Siliciumatom gebunden sind, in einem Molekül enthält;
(B) 10 bis 400 Gewichtsteile eines Silikonharzes, das Einheiten beinhaltet, die ausgewählt sind aus R₃SiO1/2-Einheit (M-Einheit), SiO4/2-Einheit (Q-Einheit), R₂SiO2/2-Einheit (D-Einheit), und RSiO3/2-Einheit (T-Einheit) (wobei es sich bei R um eine einwertige Kohlenwasserstoffgruppe handelt, die 1 bis 6 Kohlenstoffatome aufweist, und es sich bei mindestens zwei in einem Molekül um Alkenylgruppen handelt), und in dem die Summe von M-Einheit, Q-Einheit und T-Einheit in der Gesamtheit der strukturellen Einheiten 80 Mol-% oder mehr beträgt;
(C) ein Organowasserstoffpolysiloxan, das mindestens zwei an ein Siliciumatom gebundene Wasserstoffatome in einem Molekül enthält, in einer solchen Menge, dass die Anzahl der an ein Siliciumatom gebundenen Wasserstoffatome pro einer an ein Siliciumatom gebundenen Alkenylgruppe in der Komponente (A) und der Komponente (B) 1,0 bis 10,0 beträgt;
(D) einen Hydrosilylierungsreaktionskatalysator, und
(E) 30 bis 3000 ppm einer ionischen Flüssigkeit, die als ein antistatisches Mittel dient,
wobei die ionische Flüssigkeit der Komponente (E) eine ist, bei der der Unterschied zwischen dem Brechungsindex und dem Brechungsindex des gehärteten Produkts, das aus einer Grundsilikonkautschukmischung der Komponenten (A), (B), (C) und (D) gebildet wird, innerhalb des Bereichs von ± 0,04 liegt, und wobei der Brechungsindex unter Verwendung eines Abbe-Refraktometers in Übereinstimmung mit der Beschreibung gemessen wird.

2. Die wärmehärtbare Silikonkautschukzusammensetzung gemäß Anspruch 1, wobei die ionische Flüssigkeit der Komponente (E) bei Normaltemperatur (23 °C) eine Flüssigkeit ist.

3. Die wärmehärtbare Silikonkautschukzusammensetzung gemäß Anspruch 1 oder 2, wobei die ionische Flüssigkeit der Komponente (E) als anionischen Bestandteil Bis(trifluormethansulfonyl)imid oder Bis(fluorsulfonyl)imid aufweist.

4. Die wärmehärtbare Silikonkautschukzusammensetzung gemäß einem der Ansprüche 1 bis 3, wobei die ionische Flüssigkeit der Komponente (E) als kationischen Bestandteil ein Imidazolium-basiertes Kation, ein Pyrrolidinium-basiertes Kation, ein Pyridinium-basiertes Kation, oder ein Ammonium-basiertes Kation aufweist.

5. Die wärmehärtbare Silikonkautschukzusammensetzung gemäß Anspruch 1 oder 2, wobei die Komponente (E) eine ist, die aus 1-Butyl-1-methylpyrrolidinium-bis-(trifluormethansulfonyl)imid, 1-Ethyl-3-methylimidazolium-bis(fluorsulfonyl)imid, 1-Butyl-3-methylpyridinium-bis-(trifluormethansulfonyl)imid, Diallyldimethylammonium-bis(trifluormethansulfonyl)imid, 1-Butyl-3-methylpyridinium-bis(fluorsulfonyl)imid, 1-Ethyl-3-methylpyridinium-bis(fluorsulfonyl)imid, 1-Ethyl-3-methylimidazolium-bis(trifluormethansulfonyl)imid, 1-Methyl-1-propylpyrrolidinium-bis(fluorosulfonyl)imid, 1-Ethyl-3-Methylimidazolium-bis(fluorsulfonyl)imid, Methyltrioctylammonium-bis(trifluormethansulfonyl)imid, und Tributylmethylammonium-bis(trifluormethansulfonyl)imid ausgewählt ist.

6. Die wärmehärtbare Silikonkautschukzusammensetzung gemäß einem der Ansprüche 1 bis 5, wobei die Gesamtlichtdurchlässigkeit bei 600 nm eines Bogens, der aus einem gehärteten Produkt der Zusammensetzung gebildet wurde und eine Dicke von 12 mm aufweist, größer als 85% ist.

7. Die wärmehärtbare Silikonkautschukzusammensetzung gemäß einem der Ansprüche 1 bis 5, wobei die Gesamtlichtdurchlässigkeit bei 600 nm eines Bogens, der aus einem gehärteten Produkt der Zusammensetzung gebildet wurde und eine Dicke von 2 mm aufweist, größer als 93% ist.

8. Ein gehärtetes Produkt der wärmehärtbaren Silikonkautschukzusammensetzung gemäß einem der Ansprüche 1 bis 7.

9. Das gehärtete Produkt gemäß Anspruch 8, wobei die Gesamtlichtdurchlässigkeit bei 600 nm eines Bogens mit einer Dicke von 12 mm größer als 85% ist.

10. Das gehärtete Produkt gemäß Anspruch 8, wobei die Gesamtlichtdurchlässigkeit bei 600 nm eines Bogens mit einer Dicke von 2 mm größer als 93% ist.

## Revendications

1. Composition de caoutchouc de silicone thermodurcissable comprenant :
(A) 100 parties en masse d'un organopolysiloxane ayant un degré de polymérisation moyen allant de 50 à 10000 et contenant au moins deux groupes alcényle liés à un atome de silicium dans une molécule ;
(B) 10 à 400 parties en masse d'une résine de silicone qui comporte des unités sélectionnées parmi l'unité R₃SiO1/2 (unité M), l'unité SiO4/2 (unité Q), R, l'unité R₂SiO2/2 (unité D) et l'unité RSiO3/2 (unité T) (où R est un groupe hydrocarboné monovalent ayant 1 à 6 atome(s) de carbone dont au moins deux dans une molécule sont des groupes alcényle) et où une somme de l'unité M, de l'unité Q et de l'unité T dans les unités structurelles entières est supérieure ou égale à 80% en moles ;
(C) un organohydrogénopolysiloxane contenant au moins deux atomes d'hydrogène liés à un atome de silicium dans une molécule, en une quantité telle que le nombre d'atomes d'hydrogène liés à un atome de silicium par groupe alcényle lié à un atome de silicium dans le composant (A) et le composant (B) est de 1,0 à 10,0 ;
(D) un catalyseur de réaction d'hydrosilylation, et
(E) 30 à 3000 ppm d'un liquide ionique servant d'agent antistatique,
dans laquelle le liquide ionique du composant (E) est un liquide dans lequel une différence d'un indice de réfraction par rapport à un indice de réfraction d'un produit durci formé d'un mélange de caoutchouc de silicone de base des composants (A), (B), (C) et (D) se trouve dans une plage de ±0,04, et dans laquelle l'indice de réfraction est mesuré en utilisant un réfractomètre d'Abbe conformément à la description.

2. Composition de caoutchouc de silicone thermodurcissable selon la revendication 1, dans laquelle le liquide ionique du composant (E) est un liquide à une température normale (23°C).

3. Composition de caoutchouc de silicone thermodurcissable selon la revendication 1 ou 2, dans laquelle le liquide ionique du composant (E) a le bis(trifluorométhanesulfonyl)imide ou le bis(fluorosulfonyl)imide, en tant que composant anionique.

4. Composition de caoutchouc de silicone thermodurcissable selon l'une quelconque des revendications 1 à 3, dans laquelle le liquide ionique du composant (E) a un cation à base d'imidazolium, un cation à base de pyrrolidinium, un cation à base de pyridinium, ou un cation à base d'ammonium, en tant que composant cationique.

5. Composition de caoutchouc de silicone thermodurcissable selon la revendication 1 ou 2, dans laquelle le composant (E) est un composant choisi parmi le 1-butyl-1-méthylpyrrolidinium·bis-(trifluorométhanesulfonyl)imide, le 1-éthyl-3-méthylimidazolium•bis(fluorosulfonyl)imide, le 1-butyl-3-méthylpyridinium•bis-(trifluorométhanesulfonyl)imide, le diallyldiméthylammonium•bis(trifluorométhanesulfonyl)imide, le 1-butyl-3-méthylpyridinium•bis(fluorosulfonyl)imide, le 1-éthyl-3-méthylpyridinium•bis(fluorosulfonyl)imide, le 1-éthyl-3-méthylimidazolium•bis-(trifluorométhanesulfonyl)imide, le 1-méthyl-1-propylpyrrolidinium•bis(fluorosulfonyl)-imide, le 1-éthyl-3-méthylimidazolium•bis(fluorosulfonyl)imide, le méthyltrioctylammonium•bis(trifluorométhanesulfonyl)-imide, et le tributylméthylammonium•bis(trifluorométhanesulfonyl)-imide.

6. Composition de caoutchouc de silicone thermodurcissable selon l'une quelconque des revendications 1 à 5, dans laquelle une transmittance lumineuse totale à 600 nm d'une feuille formée d'un produit durci de la composition et ayant une épaisseur de 12 mm est supérieure à 85%.

7. Composition de caoutchouc de silicone thermodurcissable selon l'une quelconque des revendications 1 à 5, dans laquelle une transmittance lumineuse totale à 600 nm d'une feuille formée d'un produit durci de la composition et ayant une épaisseur de 2 mm est supérieure à 93%.

8. Produit durci de la composition de caoutchouc de silicone thermodurcissable selon l'une quelconque des revendications 1 à 7.

9. Produit durci selon la revendication 8, dans lequel une transmittance lumineuse totale à 600 nm d'une feuille ayant une épaisseur de 12 mm est supérieure à 85%.

10. Produit durci selon la revendication 8, dans lequel une transmittance lumineuse totale à 600 nm d'une feuille ayant une épaisseur de 2 mm est supérieure à 93%.
